# EUROPÄISCHE PATENTSCHRIFT

(11) **EP 1 500 323 B1**
(45) Veröffentlichungstag und Bekanntmachung des Hinweises auf die Patenterteilung: **26.09.2007**
(21) Anmeldenummer: 04103388.7
(22) Anmeldetag: 15.07.2004
(51) Int. Cl.: A01F 7/06, A01F 12/18

(54) **Erntegutbearbeitungselement für einen Rotor einer Gutbearbeitungseinrichtung eines Mähdreschers**
Crop processing element for a rotor of a crop treatment device of a combine harvester
Elément de traitement de produit de récolte pour un rotor d'un dispositif pour le traitement de récolte d'une moissonneuse-batteuse

(30) Priorität: 24.07.2003 US 626220
(43) Veröffentlichungstag der Anmeldung: 26.01.2005
(60) Teilanmeldung: 07107131.0
(73) Patentinhaber: DEERE & COMPANY, Moline, Illinois 61265-8098 (US)
(72) Erfinder: Mackin, Ryan Patrick, Milan, IL Illinois 61264 (US); Heim, Daniel Marc, Moline, IL Illinois 61265 (US); Ehrecke, Kevin Laverne, Davenport, IA 52804 (US); Puryk, Corwin Marcus Raymond, East Moline, IL Illinois 61244 (US); Stickler, Mark Frederick, Silvis, IL Illinois 61282 (US)
(74) Vertreter: Holst, Sönke

(56) Entgegenhaltungen:
- US-A- 4 274 426
- US-A- 5 556 337
- US-A1- 2002 121 078

## Beschreibung

Die Erfindung betrifft ein Erntegutbearbeitungselement für einen Rotor einer Gutbearbeitungseinrichtung eines Mähdreschers.

Mähdrescher sind große Maschinen, die landwirtschaftlich angebautes Erntegut ernten, dreschen, trennen und reinigen. Das erhaltene saubere Korn wird in einem am Mähdrescher angeordneten Korntank gelagert. Es kann durch einen Entladeschneckenförderer aus dem Korntank auf einen Lastwagen, Anhänger oder in ein anderes Behältnis entladen werden.

Rotormähdrescher weisen einen oder zwei große Rotoren zum Dreschen und Trennen des Ernteguts auf. Bei den meisten Rotormähdreschern ist der Rotor oder sind die Rotoren entlang der Längsachse des Mähdreschers ausgerichtet. Diese Rotoren sind mit einem Beschickungsabschnitt zur Annahme des geernteten Materials, einem Dreschabschnitt zum Dreschen des Materials aus dem Beschickungsabschnitt und einem Trennabschnitt ausgestattet, um im vom Dreschabschnitt einlaufenden Erntegut enthaltene Körner freizusetzen.

Rotoren für Mähdrescher wurden in einer Vielzahl von Konfigurationen bereitgestellt, um die Effizienz bei der Ernte bei einer großen Vielzahl an Erntegutarten und -bedingungen zu optimieren. Es wurden beispielweise Änderungen an zylindrischen und kegelstumpfförmigen Trommelformen durchgeführt, wie sie in der US 4 139 013 A, US 4 266 560 A und US 4 274 426 A offenbart wurden.

Die der Erfindung zu Grunde liegende Aufgabe wird darin gesehen, einen verbesserten Rotor für einen Mähdrescher bereitzustellen.

Diese Aufgabe wird erfindungsgemäß durch die Lehre der Patentansprüche 1 und 5 gelöst, wobei in den weiteren Patentansprüchen Merkmale aufgeführt sind, die die Lösung in vorteilhafter Weise weiterentwickeln.

Die vorliegende Erfindung bezieht sich auf ein zusammengesetztes Erntegutbearbeitungselement für den Rotor eines Mähdreschers, insbesondere ein Dreschelement. Es ist auf die Trommel des Rotors aufsetzbar und umfasst eine hohle Trägerstruktur mit mehreren sich nach außen erstreckenden Guteingriffsabschnitten, die in axialer und Umfangsrichtung des Rotors gegeneinander versetzt sind. Durch die Einteiligkeit wird die Stabilität des Erntegutbearbeitungselements verbessert, außerdem ist es stabiler und preiswert herstellbar.

Das Erntegutbearbeitungselement ist alternativ oder zusätzlich an seiner Vorderseite mit einer Beschickungselementbefestigungseinrichtung ausgestattet, an der ein rückwärtiger Bereich eines vorzugsweise wendelförmigen Beschickungselements befestigt wird.

Außerdem kann das Erntegutbearbeitungselement alternativ oder zusätzlich derart gestaltet sein, dass es auf einen kegelstumpfförmigen Abschnitt des Rotors passt, wobei seine äußere Oberfläche bei einer Drehung des Rotors einen zylindrischen Mantel beschreibt.

In den Zeichnungen ist ein nachfolgend näher beschriebenes Ausführungsbeispiel der Erfindung dargestellt. Es zeigt:
- Fig. 1: eine halbschematische Seitenansicht eines Rotormähdreschers,

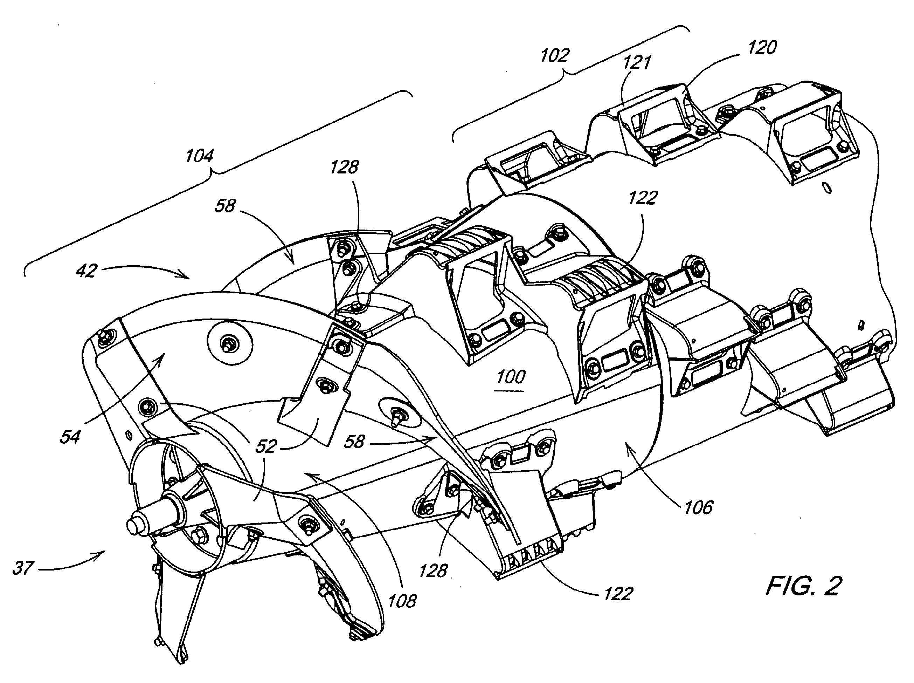

- Fig. 2: eine Seitenansicht des Beschickungs- und Dreschabschnitts des Rotors, und

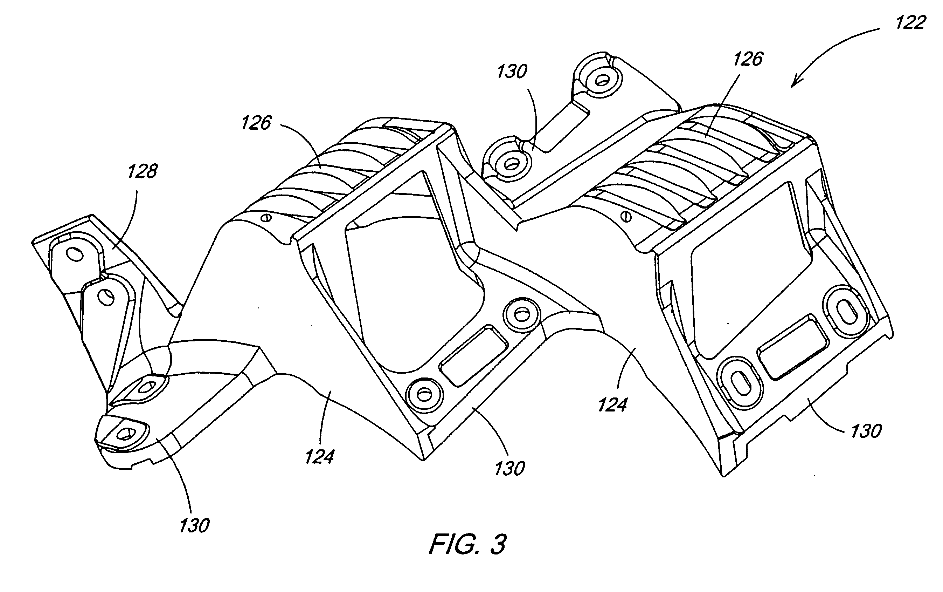

- Fig. 3: eine perspektivische Ansicht eines zusammengesetzten Dreschelements für den Rotor.

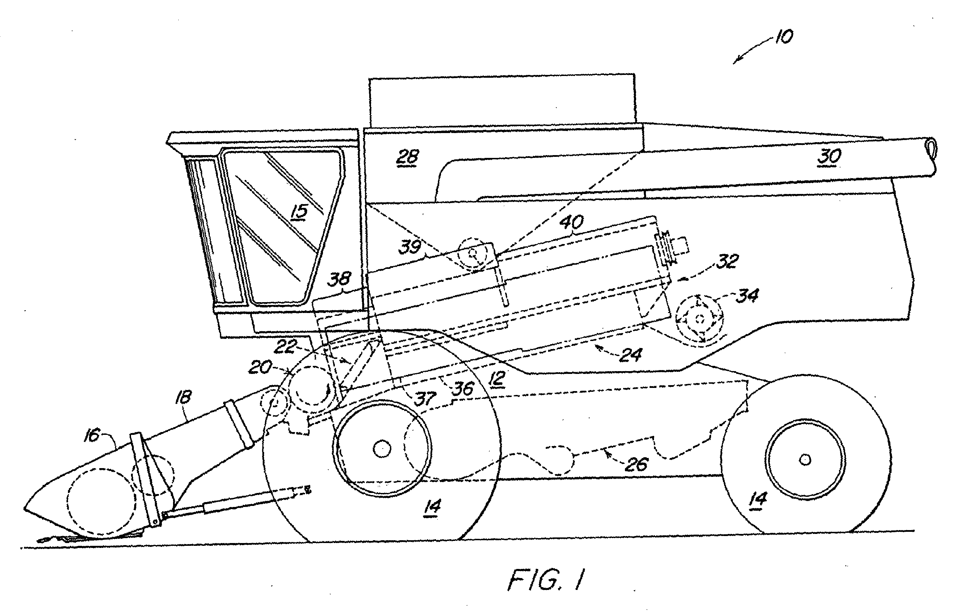

Die Figur 1 zeigt einen Mähdrescher 10, der einen tragenden Aufbau 12 mit im Eingriff mit dem Erdboden befindlichen Rädern 14 aufweist. Der Betrieb des Mähdreschers 10 wird von einer Bedienerkabine 15 aus gesteuert. Ein Erntevorsatz 16 in Form eines Schneidwerks wird verwendet, um Erntegut aufzunehmen und es einem Schrägförderer 18 zuzuführen. Das geerntete Gut wird vom Schrägförderer 18 einer Leittrommel 20 zugeführt. Die Leittrommel 20 führt das Gut nach oben durch einen Einlassübergangsabschnitt 22 einer drehbaren Gutbearbeitungseinrichtung 24 zu.

Die drehbare Gutbearbeitungseinrichtung 24 drischt und trennt das Erntegut. Korn und Spreu fallen durch Roste an der Unterseite der Gutbearbeitungseinrichtung 24 in ein Reinigungssystem 40. Das Reinigungssystem 40 entfernt die Spreu und führt das saubere Korn einem Elevator für sauberes Korn (nicht gezeigt) zu. Der Elevator für sauberes Korn legt das saubere Korn in einem Korntank 28 ab. Das saubere Korn im Korntank 28 kann durch einen Entladeschneckenförderer auf einen Kornwagen, Anhänger oder Lastwagen entladen werden. Gedroschenes und den Trennabschnitt verlassendes Stroh wird durch einen Auslass 32 aus der Erntegutbearbeitungseinheit 24 ausgestoßen und einer Fördertrommel 34 zugeführt. Die Fördertrommel 34 stößt das Stroh wiederum an der Rückseite des Mähdreschers 10 aus.

Die axiale Gutbearbeitungseinrichtung 24 umfasst ein Rotorgehäuse 36 und einen darin angeordneten Rotor 37. Der vordere Teil des Rotors 37 und des Rotorgehäuses 36 definieren den Beschickungsabschnitt 38 der Gutbearbeitungseinrichtung 24. In Längsrichtung stromab des Beschickungsabschnitts 38 sind der Dreschabschnitt 39 und der Trennabschnitt 40. Der Rotor 37 umfasst eine Trommel 100, an der Gutbearbeitungselemente für den Beschickungsabschnitt 38, den Dreschabschnitt 39 und den Trennabschnitt 40 befestigt sind. Die Trommel 100 umfasst einen rückwärtigen zylindrischen Abschnitt 102 und einen sich nach vorn erstreckenden, kegelstumpfförmigen Abschnitt 104. Die Oberfläche des kegelstumpfförmigen Abschnitts 104 ist in einen hinteren Bereich 106 in der Nähe des rückwärtigen zylindrischen Abschnitts 102 und einen vorderen Bereich 108 aufgeteilt.

Der Rotor 37 ist im Beschickungsabschnitt 38 mit wendelförmigen Beschickungselementen 42 versehen, die im vorderen Bereich 108 des kegelstumpfförmigen Abschnitts 102 der Trommel 100 angeordnet sind. Die wendelförmigen Beschickungselemente 42 greifen in das Erntegut ein, das von der Leittrommel 20 und dem Einlassübergangsabschnitt 22 einläuft. Die Beschickungselemente 42 setzen sich aus einem vorderen Abschnitt 54 und einem hinteren Abschnitt 58 zusammen. Der vordere Abschnitt 54 jedes Beschickungselements 42 ist durch Befestigungszusammenbauten 52 an der Trommel 100 angeschraubt. Der rückwärtige Bereich 58 jedes Beschickungselements 42 ist an einer Beschickungselementbefestigungseinrichtung 128 angeschraubt, die sich von einem benachbarten Dreschelement 120 erstreckt.

Unmittelbar stromab des Beschickungsabschnitts 38 befindet sich der Dreschabschnitt 39 der Gutbearbeitungseinrichtung 24. Im Dreschabschnitt 39 ist der Rotor 37 mit einer Anzahl an Dreschelementen 120 und 122 ausgestattet, um das vom Beschickungsabschnitt 38 herangeförderte Erntegut zu dreschen. Die Dreschelemente 122 sind an dem hinteren Bereich 106 des kegelstumpfförmigen Abschnitts 104, während die Dreschelemente 120 am rückwärtigen zylindrischen Abschnitt 102 der Trommel 100 angebracht sind. Die Dreschelemente 120 am zylindrischen Abschnitt 102 der Trommel 100 umfassen jeweils eine hohle Trägerstruktur mit einem Guteingriffsabschnitt 121.

Die am hinteren Bereich 106 des kegelstumpfförmigen Abschnitts 104 der Trommel 100 angeordneten Dreschelemente 122 sind zusammengesetzte Dreschelemente mit einer hohlen Trägerstruktur 124 mit zwei sich nach außen erstreckenden Guteingriffsabschnitten 126, die bei einer Drehung des Rotors 100 einen zylindrischen Weg überstreichen. Ihre äußeren Oberflächen sind somit parallel zur Achse des Rotors 37 orientiert. Von dem Dreschelement 122 erstreckt sich die oben erwähnte Beschickungselementbefestigungseinrichtung 128, an der der hintere Abschnitt 58 des benachbarten Beschickungselements 42 angebracht ist. Die Basis des Dreschelements 122 ist mit Befestigungsflanschen 130 versehen, durch die sich Befestigungsschrauben 57 erstrecken, um das Dreschelement 122 an der Trommel 100 zu befestigen.

Die Dreschelemente 122 sind in der dargestellten Ausführungsform mit zwei in einer versetzten Anordnung befestigten Guteingriffsabschnitten 126 gezeigt, sie könnten jedoch in einer Vielzahl möglicher Anordnungen mit einem oder mehreren Guteingriffsabschnitten ausgestattet sein. Die Guteingriffsabschnitte 126 sind außerdem mit Reibleisten ausgestattet, könnten aber auch mit anderen Oberflächenprofilen versehen sein, wie sie beispielsweise in der US 6 036 598 A offenbart sind.

Die sich nach außen erstreckenden Guteingriffsabschnitte 126 überstreichen in der dargestellten Ausführungsform einen zylindrischen Weg mit einem Durchmesser, der mit dem Durchmesser des Wegs übereinstimmt, der von dem Guteingriffsabschnitt 121 der Dreschelemente 120 an dem rückwärtigen zylindrischen Abschnitt 102 der Trommel 100 des Rotors 37 überstrichen wird. Die Guteingriffsabschnitte 126 der zusammengesetzten Dreschelemente 122 könnten jedoch auch eingerichtet sein, zylindrische Wege zu überstreichen, deren Durchmesser sich von denen der Guteingriffsabschnitte 121 der Dreschelemente 120 oder von benachbarten Guteingriffsabschnitten 126 desselben Dreschelementes 122 unterscheiden.

## Patentansprüche

1. Erntegutbearbeitungselement für einen Rotor (37) einer Gutbearbeitungseinrichtung (24) eines Mähdreschers (10), mit einem ersten Guteingriffsabschnitt (126) und einem davon in Umfangsrichtung beabstandeten zweiten Guteingriffsabschnitt (126), die gemeinsam an einer Trägerstruktur (124) angeordnet sind, die am Rotor (100) befestigbar ist, **dadurch gekennzeichnet, dass** die Guteingriffsabschnitte (126) in axialer Richtung gegeneinander versetzt sind.

2. Erntegutbearbeitungselement für einen Rotor (37) einer Gutbearbeitungseinrichtung (24) eines Mähdreschers (10) nach Anspruch 1, mit mindestens einem Guteingriffsabschnitt (126), der an einer Trägerstruktur (124) angeordnet ist, die am Rotor (37) befestigbar ist, **dadurch gekennzeichnet, dass** die Trägerstruktur (124) mit einer Beschickungselementbefestigungseinrichtung (128) ausgestattet ist, an der ein rückwärtiger Bereich (58) eines vorzugsweise wendelförmigen Beschickungselements (42) anbringbar ist.

3. Erntegutbearbeitungselement für einen Rotor (37) einer Gutbearbeitungseinrichtung (24) eines Mähdreschers (10), nach Anspruch 1 oder 2, mit mindestens einem Guteingriffsabschnitt (126), der an einer Trägerstruktur (124) angeordnet ist, die an einem kegelstumpfförmigen Abschnitt (104) einer Trommel (100) des Rotors (37) befestigbar ist, **dadurch gekennzeichnet, dass** das Erntegutbearbeitungselement einen sich nach außen erstreckenden Guteingriffsabschnitt (126) aufweist, dessen Oberfläche bei einer Drehung des Rotors (37) einen zylindrischen Weg überstreicht.

4. Erntegutbearbeitungselement nach einem der vorhergehenden Ansprüche, **dadurch gekennzeichnet, dass** es ein Dreschelement (122) ist.

5. Rotor (37) mit einer Trommel (100), an der ein Erntegutbearbeitungselement nach einem der vorhergehenden Ansprüche befestigt ist.

6. Rotor (37) nach Anspruch 5, **dadurch gekennzeichnet, dass** das Erntegutbearbeitungselement an einem kegelstumpfförmigen Abschnitt (104) der Trommel (100) befestigt ist.

## Claims

1. A crop processing element for a rotor (37) of a crop processing device (24) of a combine (10), the crop processing element comprising a first crop engaging portion (126) and a second crop engaging portion (126) spaced in a circumferential direction therefrom, both crop processing portions (126) being commonly arranged on a support structure (124) which can be mounted to the rotor (37), **characterized in that** the crop engaging portions (126) are offset with respect to each other in an axial direction.

2. A crop processing element for a rotor (37) of a crop processing device (24) of a combine (10), the crop processing element comprising at least one crop engaging portion (126) arranged on a support structure (124) which can be mounted to the rotor (37), especially according to claim 1, **characterized in that** the support structure (124) is provided with an infeed element mounting device (128) to which a rear portion (58) of a preferably helical infeed element (42) can be mounted.

3. A crop processing element for a rotor (37) of a crop processing device (24) of a combine (10), the crop processing element comprising at least one crop engaging portion (126) arranged on a support structure (124) which can be mounted to a frusto-conical portion (104) of a drum (100) of the rotor (37), especially according to claim 1 or 2, **characterized in that** the crop processing element comprises an outwardly extending crop engaging portion (126) sweeping a cylindrical path during rotation of the rotor (37).

4. A crop processing element according to one of the preceding claims, **characterized in that** it is a threshing element.

5. A rotor (37) having a drum to which a crop processing element according to one of the preceding claims is mounted.

6. A rotor (37) according to claim 5, **characterized in that** the crop processing element is mounted to a frusto-conical section (104) of the drum (100).

## Revendications

1. Élément de traitement de récolte pour un rotor (37) d'un dispositif de traitement de récolte (24) d'une moissonneuse-batteuse (10), comportant une première partie de saisie des végétaux (126) et une deuxième partie de saisie des végétaux (126), située à distance de cette dernière dans le sens périphérique, lesquelles sont agencées conjointement sur une structure de support (124), qui peut être fixée contre le rotor (37), **caractérisé en ce que** les parties de saisie des végétaux (126) sont décalées l'une par rapport à l'autre dans le sens axial.

2. Élément de traitement de récolte pour un rotor (37) d'un dispositif de traitement de récolte (24) d'une moissonneuse-batteuse (10) selon la revendication 1, comportant au moins une partie de saisie des végétaux (126), qui est agencée sur une structure de support (124), qui peut être fixée contre le rotor (37), **caractérisé en ce que** la structure de support (124) est équipée d'un dispositif de fixation (128) pour élément de chargement, sur lequel peut être montée une zone arrière (58) d'un élément de chargement (42) de préférence hélicoïdal.

3. Élément de traitement de récolte pour un rotor (37) d'un dispositif de traitement de récolte (24) d'une moissonneuse-batteuse (10) selon la revendication 1 ou 2, comportant au moins une partie de saisie des végétaux (126), qui est agencée sur une structure de support (124), qui peut être fixée contre une partie tronconique (104) d'un tambour (100) du rotor (37), **caractérisé en ce que** l'élément de traitement de récolte comporte une partie de saisie des végétaux (126) qui s'étend vers l'extérieur et dont la surface suit une trajectoire cylindrique pendant une rotation du rotor (37).

4. Élément de traitement de récolte selon l'une quelconque des revendications précédentes, **caractérisé en ce que** c'est un élément de battage (122).

5. Rotor (37) comportant un tambour (100), contre lequel est fixé un élément de traitement de récolte selon l'une quelconque des revendications précédentes.

6. Rotor (37) selon la revendication 5, **caractérisé en ce que** l'élément de traitement de récolte est fixé contre une partie tronconique (104) du tambour (100).
